# EUROPÄISCHE PATENTSCHRIFT

(11) **EP 0 538 746 B1**
(45) Veröffentlichungstag und Bekanntmachung des Hinweises auf die Patenterteilung: **15.01.2003**
(21) Anmeldenummer: 92117714.3
(22) Anmeldetag: 16.10.1992
(51) Int. Cl.: B32B 27/32, B65D 65/40

(54) **Nicht siegelbare, matte, trübe, biaxial orientierte Polyolefin-Mehrschichtfolie, Verfahren zu ihrer Herstellung und ihre Verwendung**
Non-sealable, matt, opaque and biaxially oriented polyolefinic multilayered film, process for its manufacture and its use
Film en polyoléfine multicouche, non scellable, mat, opaque, orienté biaxiallement, procédé pour sa fabrication et son utilisation

(30) Priorität: 24.10.1991 DE 4135097
(43) Veröffentlichungstag der Anmeldung: 28.04.1993
(73) Patentinhaber: Trespaphan GmbH, 66539 Neunkirchen (DE)
(72) Erfinder: Murschall, Ursula, Dr., W-6505 Nierstein (DE); Speith, Angela, W-6500 Mainz (DE); Schlögl, Gunter, Dr., W-6233 Kelkheim (DE)
(74) Vertreter: Luderschmidt, Schüler & Partner GbR

(56) Entgegenhaltungen:
- EP-A- 0 008 623
- EP-A- 0 053 925
- EP-A- 0 122 495
- EP-A- 0 367 613
- WO-A-89/10839
- NL-A- 7 713 908
- US-A- 4 578 316
- US-A- 4 666 778

## Beschreibung

Die Erfindung betrifft eine nicht siegelbare, matte, trübe, biaxial orientierte Mehrschichtfolie, bestehend aus einer Basisschicht und mindestens einer Deckschicht. Die Basisschicht enthält im wesentlichen ein Polypropylenpolymeres. Die Deckschicht enthält im wesentlichen High Density Polyethylen (HDPE) und Polypropylen. Beidseitig angeordnete Deckschichten können gleich oder verschieden sein. Mindestens eine Oberfläche der Mehrschichtfolie ist matt und trübe.

Die Erfindung betrifft ferner ein Verfahren zur Herstellung der Mehrschichtfolie sowie ihre Verwendung.

Aus der US-A-4 578 316 ist eine biaxial orientierte Polyolefin-Mehrschichtfolie bekannt, deren Basisschicht aus einem Polypropylen-Homopolymeren und deren Deckschicht aus einem Blend von Polypropylen und MDPE und/oder HDPE besteht, wobei vorzugsweise 2 bis 60 % Polyethylen enthalten sind. Diese Polyolefinfolie besitzt einen niedrigen Reibungskoeffizienten in Verbindung mit einer gut benetzbaren Oberfläche; jedoch weist dieser Film eine ausgezeichnete optische Klarheit auf.

In der WO 89/10839 werden Polyolefin-Mehrschichtfolien beschrieben, deren Basisschicht aus einem Polypropylenpolymeren und deren Deckschichten entweder aus HDPE oder aus einem Ethylen-Propylen-Copolymeren oder aus einem Polypropylen bestehen, wobei die Folie bei speziellen Temperaturbedingungen gestreckt wird. Sie besitzt insbesondere einen niedrigen Reibungskoeffizienten und eine gute Benetzbarkeit, aber gleichzeitig auch einen hohen Glanz und eine geringe Trübung.

Die EP 0 122 495 beschreibt ein Laminat aus einer biaxial orientierten Polypropylenfolie mit einer weiteren Folie aus einem olefinischen Polymeren. Diese Polyolefinfolie enthält 10 bis 50 Gew.-% einer Ethylen-Komponente und eine Polypropylen-Komponente. Die Polyolefinfolie weist drei peaks im Schmelzediagramm auf und die Oberflächenrauheit liegt im Bereich von 0,2 bis 1,5 µm. Die Folie zeichnet sich durch eine hohe Transparenz und gute Hafteigenschaften aus.

Die EP 0367 613 beschreibt eine opake Folie mit einer beschreibbaren Oberfläche. Diese Oberfläche wird durch ein Blend erzeugt. Das Blend enthält ein erstes Polymer mit einem Schmelzflußindex von weniger als 1 g/10min und einem weiteren Polymeren, welche incompatibel mit dem genannten ersten Polymeren ist und bevorzugt einen Schmelzindex von 4 bis 50 g/10min aufweist.

Dem allgemeinen Stand der Technik ist zu entnehmen, daß für die unterschiedlichen Anwendungen der Polypropylenfolie unterschiedliche Eigenschaften und insbesondere spezielle Kombinationen der einzelnen Qualitätsmerkmale gefordert sind.

Die Aufgabe der vorliegenden Erfindung bestand darin, die Nachteile der im Stand der Technik vorbeschriebenen Folien zu vermeiden. Insbesondere soll eine Mehrschichtfolie zur Verfügung gestellt werden, die durch eine hohe Trübung und einen minimalen Glanz (d.h. ausgeprägte Mattigkeit) mindestens einer Oberfläche ausgezeichnet ist. Zusätzlich soll die Folie mindestens eine Deckschicht mit einer rauhen Oberfläche aufweisen.

Je nach ihrem Verwendungszweck soll die Folie gegebenenfalls zusätzlich eine bedruckbare Oberfläche und/oder eine hohe, über lange Lagerzeiten hinweg beständige Oberflächenspannung und/oder eine geringe Reibung und damit gute Laufeigenschaften auf schnelllaufenden Verpackungsmaschinen besitzen.

Erfindungsgemäß wird diese Aufgabe gelöst durch eine Mehrschichtfolie der eingangs genannten Gattung, wobei
a) die Basisschicht ein Polypropylenpolymeres und gegebenenfalls zugesetzte Additive enthält,
b) die beidseitigen Deckschichten gleich oder verschieden sein können,
c) die Deckschicht/en ein Blend zweier Komponenten A und B und gegebenenfalls zugesetzte Additive enthält/enthalten, wobei
   die Komponente A aus
   einem High Density Polyethylen und
   die Komponente B aus
   einem Polypropylenhomopolymeren
   besteht, wobei das Gewichtsverhältnis der beiden Komponenten A und b zwischen A:B = 20:80 und A:B = 80:20 liegt und
d) die Folie einen Trübungswert, gemessen nach ASTM D 1003, von >40 aufweist und
d) die Dicke der Deckschicht größer als 0,4 µm ist und
e) die Folie eine mittlere Rauhtiefe von 2,5 bis 6 µm aufweist

Die erfindungsgemäßen Folien zeigen das gewünschte optische Erscheinungsbild, d. h. eine matte Oberfläche und eine hohe Trübung. Unter matten Oberflächen im Sinne der vorliegenden Erfindung werden insbesondere solche verstanden, die Glanzwerte (gemessen nach ASTM-D 523-78) von kleiner 35 bei einem Winkel von 85° aufweisen. Trübe Folien im Sinne der Erfindung sind solche mit einem Trübungswert >40, gemessen nach ASTM-D 1003.

Die Basisschicht der erfindungsgemäßen Mehrschichtfolie enthält im wesentlichen ein Propylenpolymer und gegebenenfalls zugesetzte Additive in jeweils wirksamen Mengen. Die Basisschicht enthält im allgemeinen mindestens 70 Gew.-% des Polypropylens, vorzugsweise mindestens 90 Gew.-%, insbesondere 95 bis 99 Gew.-%. Das Polypropylenpolymere enthält zum überwiegenden Teil (mindestens 90 %) Propylen und besitzt einen Schmelzpunkt von 140 °C oder höher, vorzugsweise 150 bis 170 °C. Isotaktisches Polypropylen mit einem n-heptanlöslichen Anteil von 6 Gew.-% und weniger, Copolymere von Ethylen und Propylen mit einem Ethylengehalt von 5 Gew.-% oder weniger, Copolymere von Propylen mit C₄-C₈-α-Olefinen mit einem α-Olefingehalt von 5 Gew.-% oder weniger stellen bevorzugte Propylenpolymere für die Basisschicht dar, wobei isotaktisches Polypropylen besonders bevorzugt ist. Das Propylenpolymere der Basisschicht hat im allgemeinen einen Schmelzflußindex von 0,5 g/10 min bis 10 g/10 min, vorzugsweise 1,5 g/10 min bis 4 g/10 min, bei 230 °C und einer Kraft von 21,6 N (DIN 53 735). Die angegebenen Gewichtsprozente beziehen sich auf das jeweilige Copolymer.

Die erfindungsgemäße Mehrschichtfolie umfaßt mindestens eine erfindungsgemäße Deckschicht. In einer bevorzugten Ausführungsform ist die Mehrschichtfolie dreischichtig und auf beiden Oberflächen der Basisschicht mit Deckschichten versehen. Gegebenenfalls können zusätzlich zwischen der Basisschicht und der/den Deckschicht/en geeignete Zwischenschichten liegen.

Die auf der oder den Oberfläche/n der Basis- oder Zwischenschicht angeordnete/n Deckschicht/en enthält/enthalten im wesentlichen zwei Komponenten A und B und gegebenenfalls zugesetzte Additive. Beidseitig angeordnete Deckschichten können in ihrem Aufbau und ihrer Zusammensetzung gleich oder verschieden sein.

Zur Erzielung der gewünschten Folienoptik werden die beiden Komponenten A und B als Blend eingesetzt. Überraschenderweise führt diese Maßnahme zu einer Folie mit hoher Trübung und niedrigem Glanz. Ein Blend im Sinne der vorliegenden Erfindung ist ein legierungsartiger Verbund der einzelnen Komponenten, welcher nicht mehr mechanisch in die ursprünglichen Bestandteile zerlegt werden kann. Ein Blend weist Eigenschaften wie ein homogener Stoff auf und kann entsprechend durch geeignete Parameter charakterisiert werden.

Die Komponente A des Blends besteht aus einem High Density Polyethylen (HDPE) mit einem Schmelzbereich von 130 bis 145 °C und einer Kristallinität von 40 % bis 80 %.

High Density Polyethylene weisen eine Dichte im Bereich von 0,910 bis 0,970 g/cm³ auf. Die Viskositätszahl (nach DIN 53 728, Teil 4, in 0,1%iger Dekahydronaphtalin-Lösung bei 135 °C gemessen) liegt in einem Bereich von 200 bis 600 cm³/g, vorzugsweise im Bereich von 200 bis 400 cm³/g. Das Viskositätsmittel der Molmasse Mₙ (berechnet nach VZ = 0,046·Mₙ^{0,73}) liegt zwischen 90 000 und 400 000 g/mol, vorzugsweise zwischen 95 000 und 250 000 g/mol. Der Schmelzflußindex liegt bevorzugt im Bereich von 0,5 bis 1,5 g/10 min (DIN 53 735 bei 190 °C). Im allgemeinen sind die verwendeten HDPEs keine reinen Homopolymere, auch wenn diese ebenfalls grundsätzlich in Frage kommen, sondern sie sind mit geringem Anteil an Butylen copolymerisiert. Dessen Anteil liegt maximal bei 4 Gew.-%, im allgemeinen jedoch deutlich darunter.

Die Komponente B des Blends besteht aus einem Propylenhomopolymer, das zum überwiegenden Teil (mindestens 90 %) Propylen enthält und einen Schmelzpunkt von 140 °C oder höher, vorzugsweise 150 bis 170 °C, besitzt. Isotaktisches Polypropylen mit einem n-heptanlöslichen Anteil von 6 Gew.-% und weniger stellt ein bevorzugtes Propylenpolymeres für die Komponente B dar. Der Schmelzflußindex der eingesetzten Propylenpolymeren liegt zwischen 0,5 g/10 min und 10 g/10 min, vorzugsweise zwischen 1,5 g/10 min und 4 g/10 min, bei 230 °C und einer Kraft von 21,6 N (DIN 53 735).

Die Trübungswerte der Folie werden nach ASTM D 1003 gemessen, sind größer als 40 und liegen im allgemeinen zwischen 40 und 85, vorzugsweise zwischen >60 und 80.

Die Glanzwerte der Folie werden nach ASTM D 523-78 gemessen und betragen weniger als 35, im allgemeinen weniger als 30, vorzugsweise zwischen 15 und 25, wobei alle genannten Glanzwerte bei einem Meßwinkel von 85° gemessen sind.

Die Rauhtiefe der Folie wird nach DIN 4768 gemessen und liegt über 1,0 µm, im allgemeinen zwischen 2,5 und 6, vorzugsweise zwischen 2,5 und 4,5 µm.

Das **Gewichtsverhältnis** der beiden Komponenten A und B im Blend liegt zwischen A:B = 20:80 und A:B = 80:20, vorzugsweise zwischen A:B = 40:60 und A:B = 60:40, und liegt insbesondere bevorzugt bei A:B = 45:55.

Das Blend aus den Komponenten A und B hat einen **Schmeizflußindex** (DIN 53 735 bei 230 °C und 21,6 N Belastung) von 1,5 g/10 min bis 12 g/10 min, vorzugsweise von 2,5 g/10 min bis 6 g/10 min, wobei der Schmelzflußindex des Blends höher liegt als jener des Propylenpolymeren der Basisschicht.

Die in Anlehnung an DIN 53 728, Teil 4, gemessene reduzierte spezifische Viskosität (Viskositätszahl) des Blends liegt zwischen 1,5 und 3,5 dl/g, vorzugsweise zwischen 2,0 und 3,0 dl/g. Ein derartiges Blend ist unter dem Handelsnamen DUL 3636® von Firma Schulman GmbH, Kerpen, DE, erhältlich. Die Deckschicht/en enthält/enthalten im allgemeinen mindestens 70 Gew.-% des besagten Blends, vorzugsweise mindestens 90 Gew.-%, insbesondere 95 bis 99 Gew.-%.

Die Dicke der Deckschicht/en ist größer als 0,4 µm und liegt vorzugsweise im Bereich von 1,0 bis 3 µm, wobei beidseitige Deckschichten gleich oder verschieden dick sein können.

Die Gesamtdicke der erfindungsgemäßen Polyolefin-Mehrschichtfolie kann innerhalb weiter Grenzen variieren und richtet sich nach dem beabsichtigten Einsatz. Sie beträgt 6 bis 70 µm, vorzugsweise 10 bis 50 µm, wobei die Basisschicht etwa 50 bis 80 % der Gesamtfoliendicke ausmacht.

Zur Verbesserung der Hafteigenschaften der Deckschicht/en können die Oberflächen der Folie corona- oder flammbehandelt werden, wobei gegebenenfalls die entsprechende Behandlung einer Oberfläche ausreicht.

Um bestimmte Eigenschaften der erfindungsgemäßen Polyolefinfolie noch weiter zu verbessern, können sowohl die Basisschicht als auch die Deckschicht/en weitere Zusätze in einer jeweils wirksamen Menge enthalten, vorzugsweise Antistatika und/oder Antiblockmittel und/oder Gleitmittel und/oder Stabilisatoren und/oder Neutralisationsmittel. Alle Mengenangaben in der folgenden Ausführung in Gewichtsprozent (Gew.-%) beziehen sich jeweils auf die Schicht oder Schichten, der oder denen das Additiv zugesetzt sein kann.

Bevorzugte **Antistatika** sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C₁-C₄)-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%.

**Gleitmittel** sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,10 bis 0,35 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 mm²/s. Besonders günstig ist der Zusatz der Polydimethylsiloxane in eine oder beide Deckschicht/en.

Als **Stabilisatoren** können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.
Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Als Neutralisationsmittel sind Erdalkalistearate und -carbonate in einer Zusatzmenge von 0,01 bis 0,05 Gew.-% bevorzugt, insbesondere Calciumstearat und/oder Calciumcarbonat mit einer mittleren Teilchengröße von kleiner 0,1 mm, vorzugsweise 0,03 bis 0,07 mm, einer absoluten Teilchengröße von kleiner 10 µm, vorzugsweise kleiner 5 µm, und einer spezifischen Oberfläche von mindestens 40 m²/g.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanamin-Formaldehyd-Copolymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind. Bevorzugt werden die Antiblockmittel den Deckschichten zugesetzt.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n, die vorzugsweise beheizt wird/werden, abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist.
Zunächst wird wie beim Coextrusionsverfahren üblich das Polymere oder das Polymerblend der einzelnen Schichten in einem Extruder komprimiert und verflüssigt, wobei die gegebenenfalls zugesetzten Additive bereits im Polymeren enthalten sein können. Die Schmelzen werden dann gleichzeitig durch eine Flachdüse (Breitschlitzdüse) gepreßt, und die ausgepreßte mehrschichtige Folie wird auf einer oder mehreren vorzugsweise beheizten Abzugswalzen abgezogen, wobei sie abkühlt und sich verfestigt.
Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 8:1 bis 10:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.
An die biaxiale Streckung der Folie schließt sich ihre Thermofixierung (Wärmebehandlung) an, wobei die Folie etwa 0,5 bis 10 s lang bei einer Temperatur von 150 bis 180 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, durch einen Heiz-Kühl-Kreislauf bei einer gegenüber dem Stand der Technik erhöhten Temperatur von 60 bis 110 °C zu halten.
Darüber hinaus wird auch die biaxiale Streckung vorteilhafterweise bei erhöhter Temperatur der Folie durchgeführt, die Längsstreckung vorzugsweise bei 130 bis 150 °C und die Querstreckung vorzugsweise bei 165 bis 190 °C.

Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Bei der Flammbehandlung wird die Folie über eine Kühlwalze geführt, oberhalb derer ein Gasbrenner angeordnet ist. Die Folie wird durch eine Nipwalze satt auf die Kühlwalze gepreßt. Das aus dem Brenner ausströmende Gas wird entzündet und bildet etwa 5 bis 10 mm große Flammen. Der oxydierende Teil der Flamme trifft dabei auf der Folienoberfläche auf und sorgt für eine Erhöhung der Oberflächenenergie der Folie. Sie liegt auch hier im üblichen Rahmen.

Die erfindungsgemäße Mehrschichtfolie zeichnet sich insbesondere durch einen minimalen Glanz und eine maximale Trübung in Kombination mit einer rauhen Oberfläche aus. So wurde bei der Bestimmung der Eigenschaften verschiedener Ausführungsformen ein Trübungswert (nach ASTM D 1003) von über 40 und ein Glanz (nach ASTM D 523-78) bei einem Meßwinkel von beispielsweise 85° kleiner 35 gemessen, wobei die mittlere Rauhtiefe (nach DIN 4768) bei 2,5 bis 6 µm liegt.

Überraschenderweise zeigen die erfindungsgemäßen Mehrschichtfolien neben ihrer gewünschten Mattigkeit und Trübung eine hervorragende Bedruckbarkeit, die durch eine Flamm- oder Coronabehandlung zusätzlich verbessert werden kann, wobei überraschenderweise diese Bedruckbarkeit besonders langzeitbeständig ist.

Darüber hinaus ergaben Messungen (der Oberflächenspannung), daß die erfindungsgemäße Folie eine hohe Oberflächenspannung aufweist, die unerwarteterweise auch nach einer mehrmonatigen Lagerzeit nur unerheblich abfällt, wodurch eine sehr gute Langzeitweiterverarbeitbarkeit (Bedrucken, Metallisieren, Kaschieren) gegeben ist.

Zusammenfassend ist festzustellen, daß sich die erfindungsgemäße Mehrschichtfolie durch eine Vielzahl vorteilhafter Eigenschaften auszeichnet, insbesondere durch
einen sehr geringen Glanz,
eine matte Oberfläche,
eine hohe Trübung,
eine hohe mittlere Rauhtiefe der Oberfläche,
eine gute Kurz- und Langzeitbedruckbarkeit,
eine hohe Oberflächenspannung und
eine gute Langzeitbeständigkeit der Oberflächenspannung.

Durch diese überraschende Vielzahl ausgezeichneter Eigenschaften wird erfindungsgemäß eine Folie zur Verfügung gestellt, die sich für verschiedene Verwendungszwecke gleichermaßen hervorragend eignet, insbesondere als werbewirksame Mattkaschierfolie. Für diesen bevorzugten Verwendungszweck ist ein minimaler Glanz und eine hohe Trübung in Kombination mit einer homogenen, matten Oberfläche besonders wichtig. Darüber hinaus ist die Folie ausgezeichnet als Trägerfolie für Klebebänder (langzeitbeständige, hohe Oberflächenspannung) oder als Trägerfolie für wäßrige Barrierebeschichtungssysteme, z. B. auf Basis von wäßrigen Dispersionen von Polyvinylidenchlorid- oder Ethylenvinylalkohol-Copolymeren, zu verwenden.
Sie läßt sich für verschiedene Zwecke mit wäßrigen Druckfarben bedrucken und weist dabei eine hervorragende Kurz- und Langzeitbedruckbarkeit auf. Aufgrund ihrer guten Sofort- und Langzeitbeschichtbarkeit eignet sich die Folie auch für die Herstellung von Laminaten mit Papier, Pappe, Metallen, metallisierten Kunststoffolien und Kunststoffolien.

Die Erfindung wird nun anhand von Ausführungsbeispielen noch näher erläutert.

### Beispiel 1

Nach dem Coextrusionsverfahren wird aus einer Breitschlitzdüse bei einer Extrusionstemperatur von 260 °C als Summe eine 1 mm dicke Dreischichtfolie mit einem Schichtaufbau XZX extrudiert, d. h. die Basisschicht Z ist von zwei gleichen Deckschichten X umgeben.

Die Basisschicht besteht im wesentlichen aus einem Polypropylenhomopolymerisat mit einem n-heptanlöslichen Anteil von 4,5 Gew.-% und einem Schmelzpunkt von 165 °C. Der Schmelzflußindex des Polypropylen-Homopolymeren liegt bei 3,2 g/10 min bei 230 °C und 21,6 N Belastung (DIN 53 735).

Die beiden Deckschichten X bestehen im wesentlichen aus einem Blend (DUL 3636®, Schulman GmbH, Kerpen, DE) zweier Komponenten A und B im Verhältnis A:B = 50:50, wobei das Blend einen Schmelzflußindex von 3,8 g/10 min hat. Die Komponente A besteht aus einem HDPE mit einem Schmelzpunkt von 134 °C. Die Komponente B besteht aus einem Propylen-Polymeren.

Alle Schichten enthalten zur Stabilisierung 0,12 Gew.-% Pentaerythrityl-Tetrakis-4-(3,5-ditertiärbutyl-4-hydroxyphenyl)-propionat (®Irganox 1010) sowie als Neutralisationsmittel 0,06 Gew.-% Calciumstearat. Die Basisschicht enthält weiterhin 0,15 Gew.-% an N,N-bis-(2-hydroxyethyl)-(C₁₀-C₂₀)-alkylamin (®Armostat 300) als Antistatikum.

Die extrudierte Dreischichtfolie wird nach der Coextrusion über eine erste Abzugswalze und ein weiteres Walzentrio abgezogen und abgekühlt, anschließend längsgestreckt, über die entsprechenden Verfahrensschritte quergestreckt, fixiert, coronabehandelt und aufgewickelt, wobei im einzelnen die folgenden Bedingungen gewählt wurden:

| | |
|---|---|
| Extrusion | Extrusionstemperatur 260 °C Temperatur der ersten Abzugswalze 90 °C Temperatur des Walzentrios 50 °C |
| Längsstreckung | Streckwalze T = 137 °C Kühlwalze T = 90 °C Längsstreckung um den Faktor 5 |
| Querstreckung | Aufheizfelder T = 180 °C Streckfelder T = 180 °C Querstreckung um den Faktor 10 |
| Fixierung | Temperatur T = 155 °C |
| Coronabehandlung | Spannung: 10 000 V Frequenz: 10 000 Hz |

Die so hergestellte Mehrschichtfolie hat beidseitig eine matte Oberfläche und weist direkt nach der Herstellung eine Oberflächenspannung von 40 bis 41 mN/m auf.
Die Folie ist ca. 21,5 µm dick, wobei die Basisschicht 19 µm und jede Deckschicht 1,25 µm Dicke hat.

### Beispiel 2

Beispiel 1 wird wiederholt. Das Blend der Deckschichten besteht aus 60 Gew.-% HDPE und 40 Gew.-% Polypropylen und hat einen Schmelzflußindex von 4,0 g/10 min (DIN 53 735).

### Beispiel 3

Beispiel 1 wird wiederholt. Die Folie wird jedoch bei 185 °C um das 10fache in Querrichtung verstreckt.

### Beispiel 4

Beispiel 1 wird wiederholt. Die Temperatur der Abzugswalze beträgt 100 °C. Die Folie wird bei 132 °C längs- und bei 180 °C quergestreckt.

### Vergleichsbeispiel 1

Beispiel 1 wird wiederholt. Die Temperatur der Abzugswalze beträgt wie bei der üblichen BoPP-Mehrschichtfolienherstellung 30 °C.

### Vergleichsbeispiel 2

Beispiel 1 wird wiederholt. Die Dicke der Deckschichten beträgt 0,4 µm.

### Vergleichsbeispiel 3

Beispiel 1 wird wiederholt. Die Deckschichten bestehen aus einem Blend aus 10 Gew.-% HDPE und 90 Gew.-% Polypropylen. Der Schmelzflußindex des Blends liegt bei 4,1 g/10 min (DIN 53 735).

### Vergleichsbeispiel 4

Beispiel 1 wird wiederholt. Die Temperatur der Längsstreckung beträgt 128 °C.

### Vergleichsbeispiel 5

Beispiel 1 wird wiederholt. Die Temperatur in der Querstreckung beträgt 162 °C.

### Vergleichsbeispiel 6

Beispiel 1 der WO 89/10839 wird nachgearbeitet. Beide Oberflächen werden wie in Beispiel 1 oberflächenbehandelt.

Zur Charakterisierung der Rohstoffe und der Folien wurden die folgenden Meßmethoden benutzt:

### Schmelzflußindex

DIN 53 735 bei 21,6 N Belastung und 230 °C bzw. 190 °C bei HDPE.

### Schmelzpunkt

DSC-Messung, Maximum der Schmelzkurve, Aufheizgeschwindigkeit 20 °C/min.

### Trübung

Die Trübung der Folie wurde nach ASTM D 1003-52 gemessen.

### Glanz

Der Glanz wurde nach DIN 67 530 bestimmt. Gemessen wurde der Reflektorwert als optische Kenngröße für die Oberfläche einer Folie. Angelehnt an die Normen ASTM D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

### Mittlere Rauhtiefe

Die mittlere Rauhtiefe wurde in Anlehnung an DIN 4768 bestimmt.

### Reibung

Die Reibung wurde in Anlehnung an DIN 53 375 bestimmt.

### Oberflächenspannung

Die Oberflächenspannung wurde mittels der sogenannten Tintenmethode (DIN 53 364) bestimmt.

### Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband keine Farbe abgelöst werden, so wurde die Farbhaftung mit gut (++), bei teilweiser Farbablösung mit mäßig (±) und bei deutlicher Farbablösung mit schlecht(-) beurteilt.

### Viskositätszahl

Die Viskositätszahl bzw. reduzierte spezifische Viskosität wurde bestimmt nach DIN 53 728, Teil 4.

### Dichte

Die Dichte wurde bei 23 °C nach ISO 1183 bzw. DIN 53 479 bestimmt.

In der nachstehenden Tabelle sind die Eigenschaften der Polyolefinfolien der Beispiele und Vergleichsbeispiele zusammengefaßt.
Wie die Ergebnisse zeigen, sind die erfindungsgemäßen Polyolefinfolien jenen des Standes der Technik deutlich überlegen. Nur die erfindungsgemäßen Folien weisen die erforderliche hohe Folientrübung und den niedrigen Oberflächenglanz bei gleichzeitig rauher Oberfläche auf und zeichnen sich somit durch ihre universellen Einsatzmöglichkeiten für verschiedene Verwendungszwecke aus.

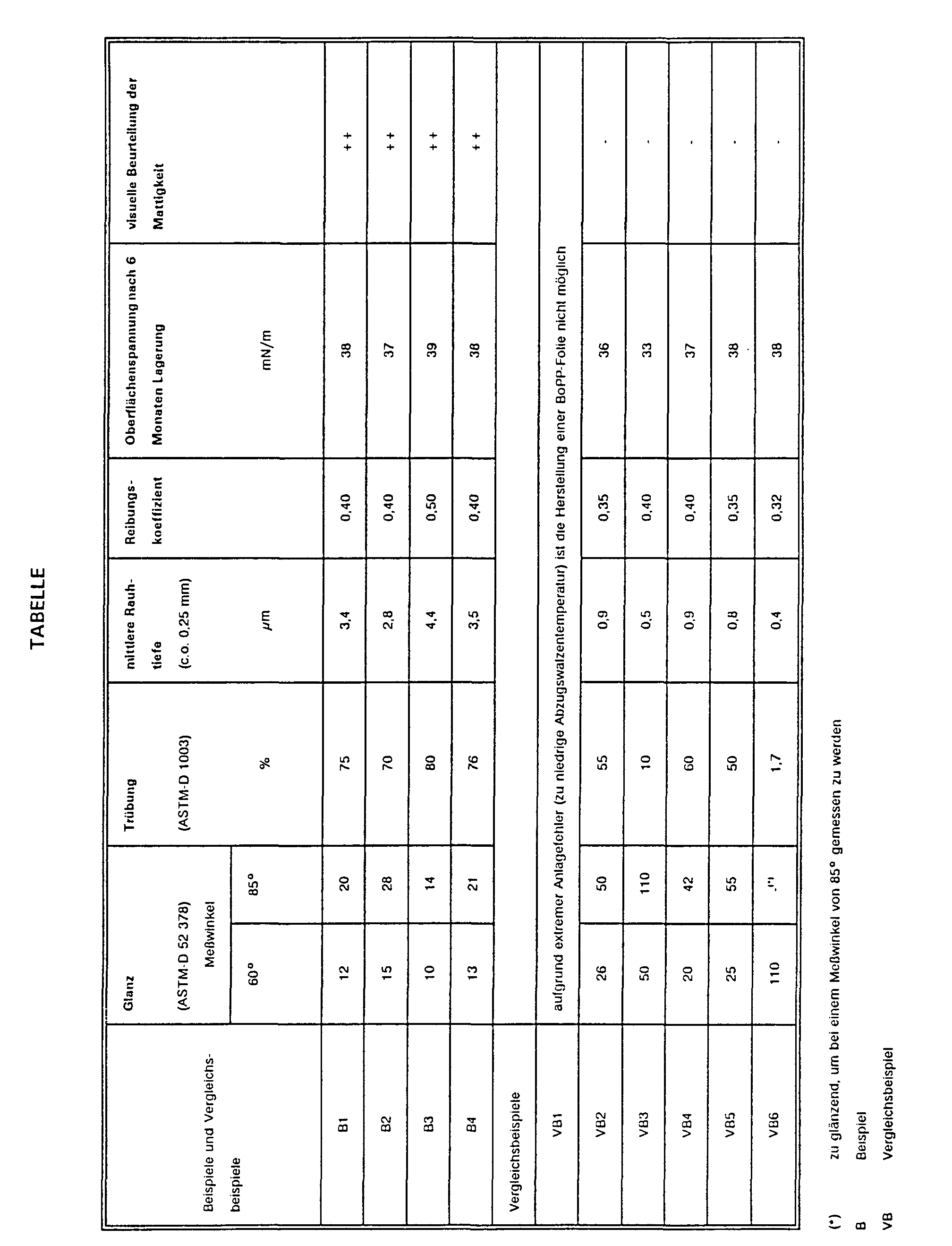

## Patentansprüche

1. Nicht siegelbare, matte, trübe, biaxial orientierte Mehrschichtfolie bestehend aus einer Basisschicht und mindestens einer Deckschicht/en, wobei
a) die Basisschicht ein Polypropylenpolymeres enthält,
b) die Deckschicht zwei Komponenten A und B enthält, wobei
die Komponente A aus
einem High Density Polyethylen und
die Komponente B aus
einem Polypropylenpolymeren
besteht und wobei das Gewichtsverhältnis der beiden Komponenten A und B zwischen A:B = 20:80 und A:B = 80:20 liegt und
c) die Folie einen Trübungswert, gemessen nach ASTM D 1003, von >40 aufweist und
d) die Dicke der Deckschicht größer als 0,4 µm ist und
e) die Folie eine mittlere Rauhtiefe von 2,5 bis 6 µm aufweist

2. Polyolefinfolie gemäß Anspruch 1, **dadurch gekennzeichnet, daß** das Propylenpolymere der Basisschicht mindestens 90 % Propylen enthält.

3. Polyolefinfolie gemäß Anspruch 1 und/oder 2, **dadurch gekennzeichnet, daß** das Propylenpolymere der Basisschicht ein isotaktisches Polypropylen mit einem n-heptanlöslichen Anteil von 6 Gew.-% und weniger ist.

4. Polyolefinfolie gemäß einem oder mehreren der Ansprüche 1 bis 3, **dadurch gekennzeichnet, daß** die Komponente B aus isotaktischem Polypropylen besteht.

5. Polyolefinfolie gemäß einem oder mehreren der Ansprüche 1 bis 4, **dadurch gekennzeichnet, daß** die Komponente A aus HDPE mit einer Schmelztemperatur im Bereich von 130 bis 145°C und einer Viskositätszahl von 200 bis 600 cm³/g, vorzugsweise 200 bis 400 cm³/g, besteht.

6. Polyolefinfolie gemäß einem oder mehreren der Ansprüche 1 bis 5, **dadurch gekennzeichnet, daß** die Basisschicht und/oder die Deckschicht/en als Additive Antistatika und/oder Antiblockmittel und/oder Gleitmittel und/oder Stabilisatoren und/oder Neutralisationsmittel enthält/enthalten.

7. Polyolefinfolie gemäß einem oder mehreren der Ansprüche 1 bis 6, **dadurch gekennzeichnet, daß** sie Additive in einer Menge von 0,01 bis 5 Gew.-%, bezogen auf die jeweilige Schicht, enthält.

8. Polyolefinfolie gemäß einem oder mehreren der Ansprüche 1 bis 7, **dadurch gekennzeichnet, daß** das Gewichtsverhältnis der beiden Komponenten A und B zwischen A:B = 40:60 und A:B = 60:40 liegt.

9. Polyolefinfolie gemäß einem oder mehreren der Ansprüche 1 bis 8, **dadurch gekennzeichnet, daß** der Schmelzflußindex des Blends höher liegt als derjenige des Propylenpolymeren der Basisschicht.

10. Polyolefinfolie gemäß einem oder mehreren der Ansprüche 1 bis 9, **dadurch gekennzeichnet, daß** der Schmelzflußindex (DIN 53 735) des Propylenpolymeren der Basisschicht zwischen 0,5 g/10 min und 10 g/10 min liegt.

11. Polyolefinfolie gemäß einem oder mehreren der Ansprüche 1 bis 10, **dadurch gekennzeichnet, daß** die Dicke der Deckschicht/en unabhängig voneinander zwischen 0,4 und 3,0 µm liegt.

12. Polyolefinfolie gemäß einem oder mehreren der Ansprüche 1 bis 11, **dadurch gekennzeichnet, daß** die Gesamtdicke der Mehrschichtfolie zwischen 6 und 70 µm liegt.

13. Polyolefinfolie gemäß einem oder mehreren der Ansprüche 1 bis 12, **dadurch gekennzeichnet, daß** eine, gegebenenfalls beide Oberfläche/n mit einer Bedruckung versehen ist/sind.

14. Polyolefinfolie gemäß einem oder mehreren der Ansprüche 1 bis 12, **dadurch gekennzeichnet, daß** eine oder beide Oberfläche/n eine, gegebenenfalls partielle, Klebeschicht enthalten.

15. Verfahren zur Herstellung einer Polyolefinfolie nach Anspruch 1, **dadurch gekennzeichnet, daß** die Komponenten A und B als Blend die Deckschicht bilden.

16. Vefahren nach Anspruch 15, **dadurch gekennzeichnet, daß** das Blend einen Schmelzflußindex von 1,5 bis 12 g/10 min (DIN 53 735 bei 230 °C) aufweist.

17. Verfahren nach Anspruch 15, bei dem die den einzelnen Schichten der Folie entsprechenden Schmelzen durch eine Flachdüse coextrudiert werden, die coextrudierte Folie zur Verfestigung abgekühlt wird, die Folie biaxial gestreckt wird mit einem Längsstreckverhältnis von 4:1 bis 7:1 und einem Querstreckverhältnis von 8:1 bis 10:1, die biaxial gestreckte Folie thermofixiert, gegebenenfalls coronabehandelt und anschließend aufgewickelt wird, **dadurch gekennzeichnet, daß** die coextrudierte Folie über eine Abzugswalze, deren Temperatur zwischen 60 und 110 °C liegt, abgezogen wird.

18. Verfahren nach Anspruch 17, **dadurch gekennzeichnet, daß** die Längsstreckung der Folie bei 130 bis 150 °C und die Querstreckung bei 165 bis 190°C durchgeführt wird.

19. Verwendung der Polyolefinfolie gemäß einem oder mehreren der Ansprüche 1 bis 12 als Trägerfolie für eine, gegebenenfalls partielle, Klebeschicht.

20. Verwendung der Polyolefinfolie gemäß einem oder mehreren der Ansprüche 1 bis 12 als Trägerfolie für wäßrige Barrierebeschichtungssysteme.

21. Verwendung der Polyolefinfolie gemäß einem oder mehreren der Ansprüche 1 bis 12 zur Herstellung von bedruckten Polyolefinfolien.

22. Verwendung der Polyolefinfolie gemäß einem oder mehreren der Ansprüche 1 bis 12 zur Herstellung von Laminaten.

23. Verwendung der Polyolefinfolie gemäß Anspruch 22 zur Herstellung von Laminaten mit Papier, Pappe, Metallen, metallisierten Kunststoffolien und Kunststoffolien.

24. Laminate, enthaltend eine Polyolefinfolie gemäß einem oder mehreren der Ansprüche 1 bis 12.

25. Beschichtete Barrieresysteme, enthaltend eine Polyolefinfolie gemäß einem oder mehreren der Ansprüche 1 bis 12.

## Claims

1. Non-sealable, matt, hazy, biaxially oriented multilayer film consisting of a base layer and at least one cover layer(s), wherein
a) the base layer comprises a polypropylene polymer,
b) the cover layer comprises two components A and B,
component A consisting of
a high density polyethylene and
component B consisting of
a polypropylene polymer
and the weight ratio of the two components A and B being between A:B = 20:80
A:B = 80:20 and
c) the film has a haze value, measured according to ASTM D 1003, of > 40 and
d) the thickness of the cover layer is greater than 0.4 µm and
e) the film has a mean surface roughness of from 2.5 to 6 µm.

2. Polyolefin film according to claim 1, **characterised in that** the propylene polymer of the base layer contains at least 90 % propylene.

3. Polyolefin film according to claim 1 and/or 2, **characterised in that** the propylene polymer of the base layer is an isotactic polypropylene having an n-heptane-soluble fraction of 6 % by weight or less.

4. Polyolefin film according to one or more of claims 1 to 3, **characterised in that** component B consists of isotactic polypropylene.

5. Polyolefin film according to one or more of claims 1 to 4, **characterised in that** component A consists of HDPE having a melting point in the range from 130 to 145°C and a viscosity number of from 200 to 600 cm³/g, preferably from 200 to 400 cm³/g.

6. Polyolefin film according to one or more of claims 1 to 5, **characterised in that** the base layer and/or the cover layer(s) comprise(s), as additives, antistatic agents and/or antiblocking agents and/or lubricants and/or stabilisers and/or neutralising agents.

7. Polyolefin film according to one or more of claims 1 to 6, **characterised in that** it contains additives in an amount of from 0.01 to 5 % by weight, based on the layer in question.

8. Polyolefin film according to one or more of claims 1 to 7, **characterised in that** the weight ratio of the two components A and B is between A:B = 40:60 and A:B = 60:40.

9. Polyolefin film according to one or more of claims 1 to 8, **characterised in that** the melt flow index of the blend is higher than that of the propylene polymer of the base layer.

10. Polyolefin film according to one or more of claims 1 to 9, **characterised in that** the melt flow index (DIN 53 735) of the propylene polymer of the base layer is between 0.5 g/10 min and 10 g/10 min.

11. Polyolefin film according to one or more of claims 1 to 10, **characterised in that** the thickness of the cover layer(s), each independently of the other, is between 0.4 and 3.0 µm.

12. Polyolefin film according to one or more of claims 1 to 11, **characterised in that** the total thickness of the multilayer film is between 6 and 70 µm.

13. Polyolefin film according to one or more of claims 1 to 12, **characterised in that** one, optionally both, surface(s) is/are provided with printing.

14. Polyolefin film according to one or more of claims 1 to 12, **characterised in that** one or both surface(s) has/have an, optionally partial, adhesive layer.

15. Process for the production of a polyolefin film according to claim 1, **characterised in that** components A and B form the cover layer as a blend

16. Process according to claim 15, **characterised in that** the blend has a melt flow index of from 1.5 to 12 g/10 min (DIN 53 735 at 230°C).

17. Process according to claim 15, wherein the melts corresponding to the individual layers of the film are co-extruded through a slot die, the co-extruded film is cooled until it solidifies, the film is biaxially stretched in a longitudinal stretching ratio of from 4:1 to 7:1 and a transverse stretching ratio of from 8:1 to 10:1, the biaxially stretched film is thermoset, optionally corona-treated, and then wound up, **characterised in that** the co-extruded film is drawn off by means of a draw-off roll, the temperature of which is between 60 and 110°C.

18. Process according to claim 17, **characterised in that** the longitudinal stretching of the film is carried out at from 130 to 150°C and the transverse stretching at from 165 to 190°C.

19. Use of the polyolefin film according to one or more of claims 1 to 12 as a backing film for an, optionally partial, adhesive layer.

20. Use of the polyolefin film according to one or more of claims 1 to 12 as a backing film for aqueous barrier coating systems.

21. Use of the polyolefin film according to one or more of claims 1 to 12 in the production of printed polyolefin films.

22. Use of the polyolefin film according to one or more of claims 1 to 12 in the production of laminates.

23. Use, according to claim 22, of the polyolefin film in the production of laminates with paper, cardboard, metals, metallised plastics films and plastics films.

24. Laminates comprising a polyolefin film according to one or more of claims 1 to 12.

25. Coated barrier systems comprising a polyolefin film according to one or more of claims 1 to 12.

## Revendications

1. Feuille multicouche soumise à une orientation biaxe, trouble, mate, inapte au thermosoudage, constituée par une couche de base et par au moins une couche de recouvrement, dans laquelle
a) la couche de base contient un polymère de polypropylène,
b) la couche de recouvrement contient deux composants A et B,
le composant A étant constitué par
un polyéthylène haute densité, et
le composant B étant constitué par
un polymère de polypropylène,
et dans laquelle le rapport pondéral des deux composants A et B se situe entre A : B = 20 : 80 et A : B = 80 : 20, et
c) la feuille présente une valeur de turbidité, mesurée conformément à la norme ASTM-D 1003, > 40, et
d) l'épaisseur de la couche de recouvrement est supérieure à 0,4 µm, et
e) la feuille présente une profondeur de rugosité moyenne de 2,5 à 6 µm.

2. Feuille de polyoléfine selon la revendication 1, **caractérisée en ce que** le polymère de polypropylène de la couche de base contient du propylène à concurrence d'au moins 90 %.

3. Feuille de polyoléfine selon l'une quelconque des revendications 1 et/ou 2 **caractérisée en ce que** le polymère de polypropylène de la couche de base est un polypropylène isotactique comprenant une fraction soluble dans du n-heptane de 6 % en poids et moins.

4. Feuille de polyoléfine selon une ou plusieurs des revendications 1 à 3, **caractérisée en ce que** le composant B est constitué par du polypropylène isotactique.

5. Feuille de polyoléfine selon une ou plusieurs des revendications 1 à 4, **caractérisée en ce que** le composant A est constitué par du HDPE possédant une température de fusion dans la plage de 135 à 140 °C et un indice de viscosité de 200 à 600 cm³/g, de préférence de 200 à 400 cm³/g.

6. Feuille de polyoléfine selon une ou plusieurs des revendications 1 à 5, **caractérisée en ce que** la couche de base et/ou la couche/les couches de recouvrement contient/contiennent à titre d'additifs des agents antistatiques et/ou des agents s'opposant à l'adhérence de contact entre feuilles et/ou des agents de glissement et/ou des stabilisateurs et/ou des agents de neutralisation.

7. Feuille de polyoléfine selon une ou plusieurs des revendications 1 à 6, **caractérisée en ce qu'**elle contient des additifs en une quantité de 0,01 à 5 % en poids, rapportés à la couche respective.

8. Feuille de polyoléfine selon une ou plusieurs des revendications 1 à 7, **caractérisée en ce que** le rapport pondéral des deux composants A et B se situe entre A : B = 40 : 60 et A : B = 60 : 40.

9. Feuille de polyoléfine selon une ou plusieurs des revendications 1 à 8, **caractérisée en ce que** l'indice de fluidité à chaud du mélange homogène est supérieur à celui du polymère de propylène de la couche de base.

10. Feuille de polyoléfine selon une ou plusieurs des revendications 1 à 9, **caractérisée en ce que** l'indice de fluidité à chaud (norme DIN 53 735) du polymère de propylène de la couche de base se situe entre 0,5 g/10 min et 10 g/10 min.

11. Feuille de polyoléfine selon une ou plusieurs des revendications 1 à 10, **caractérisée en ce que** l'épaisseur de la couche/des couches de recouvrement indépendamment l'une de l'autre se situe entre 0,4 et 3,0 µm.

12. Feuille de polyoléfine selon une ou plusieurs des revendications 1 à 11, **caractérisée en ce que** l'épaisseur totale de la feuille multicouche se situe entre 6 et 70 µm.

13. Feuille de polyoléfine selon une ou plusieurs des revendications 1 à 12, **caractérisée en ce qu'**une surface, le cas échéant, les deux surfaces, est munie/sont munies d'une impression.

14. Feuille de polyoléfine selon une ou plusieurs des revendications 1 à 12, **caractérisée en ce qu'**une surface ou les deux surfaces contiennent une couche adhésive, le cas échéant une couche partiellement adhésive.

15. Procédé pour la préparation d'une feuille en polyoléfine selon la revendication 1, **caractérisé en ce que** les composants A et B, sous la forme d'un mélange homogène, forme la couche de recouvrement.

16. Procédé selon la revendication 15, **caractérisé en ce que** le mélange homogène présente un indice de fluidité à chaud de 1,5 à 12 g/10 min (norme DIN 53 735 à 230 °C ).

17. Procédé selon la revendication 15, dans lequel on soumet les masses fondues correspondant aux couches individuelles de la feuille à une coextrusion à travers une filière pour feuilles, on soumet la feuille à un allongement biaxe avec un rapport d'allongement en direction longitudinale de 4:1 à 7:1 et avec un rapport d'allongement en direction transversale de 8:1 à 10:1, on soumet à un thermofixage la feuille soumise à un allongement biaxe, on la soumet le cas échéant à un traitement par effluves négatives et ensuite, on l'enroule, **caractérisé en ce qu'**on étire la feuille coextrudée par-dessus un rouleau d'étirage dont la température se situe entre 60 et 110 °C.

18. Procédé selon la revendication 17, **caractérisé en ce qu'**on effectue l'allongement de la feuille en direction longitudinale à une température de 130 à 150 °C et l'allongement en direction transversale à une température de 165 à 190 °C.

19. Utilisation de la feuille de polyoléfine selon une ou plusieurs des revendications 1 à 12, comme feuille de support pour une couche adhésive, le cas échéant pour une couche partiellement adhésive.

20. Utilisation de la feuille de polyoléfine selon une ou plusieurs des revendications 1 à 12, comme feuille de support pour des systèmes d'enduction aqueux ayant un effet d'arrêt.

21. Utilisation de la feuille de polyoléfine selon une ou plusieurs des revendications 1 à 12, pour la fabrication de feuilles en polyoléfine imprimées.

22. Utilisation de la feuille de polyoléfine selon une ou plusieurs des revendications 1 à 11, pour la fabrication de stratifiés.

23. Utilisation de la feuille de polyoléfine selon la revendication 22, pour la fabrication de stratifiés avec du papier, du carton, des métaux, des feuilles métallisées en matière synthétique et des feuilles en matière synthétique.

24. Stratifiés contenant une feuille de polyoléfine selon une ou plusieurs des revendications 1 à 12.

25. Systèmes enduits ayant un effet d'arrêt contenant une feuille de polyoléfine selon une ou plusieurs des revendications 1 à 12.
